# EUROPEAN PATENT APPLICATION

(11) **EP 2 615 541 A1**
(43) Date of publication of application: **17.07.2013**
(21) Application number: 12150784.2
(22) Date of filing: 11.01.2012
(51) Int. Cl.: G06F 9/44

(54) **Computer implemented method, apparatus, network server and computer program product**

(71) Applicant: Siemens Aktiengesellschaft, 80333 München (DE)
(72) Inventor: Votintseva, Anjelika, 85521 Ottobrunn (DE)

(57) **Abstract**

The present invention provides computer implemented method for generating user element explanations for elements of a formal language, the method comprising the steps of identifying at least one element of said formal language, selecting according to a target domain a respective mapping rule for each identified element, wherein the mapping rule refers to at least one word of a natural language and/or at least one audio file, generating at least one user element explanation for each identified element by automatically combining the respective at least one word of a natural language and/or at least one audio file according to predefined grammar rules, wherein the predefined grammar rules form part of the selected mapping rule and specify how to combine the at least one word of a natural language and/or at least one audio file into said user element explanation, and linking the generated at least one user element explanation with the respective identified element of said formal language. The present invention further provides an apparatus, a network server and a computer program product.

## Description

### FIELD OF THE INVENTION

The present invention provides a computer implemented method for generating user element explanations for elements of a formal language. The present invention further provides an apparatus, a network server and a computer program product.

### TECHNICAL BACKGROUND OF THE INVENTION

Today developers of complex systems are forced to deal with a plurality of different tools and different formal languages at different steps of the development of said systems and for different aspects of said systems. When communicating, for example, with colleagues from different departments, customers, or supervisors a developer might be confronted with different terms and languages used by those people for the same type of element.

Because there are a lot of different formal languages, wherein a formal language can be a text based language or a model based language, it is difficult for developers to understand models or programs that were created in a different formal language or refer to another application's domain.

One reason for this is that the different formal languages have different semantics and overloaded technical terms. This also makes difficult the integration of different development tools and different formal languages.

Currently available commercial tools usually provide textual help only for the users of the specific tool helping them to understand only the tool not the code being written or the model being modeled. For example models created with a visual modeling tool do not contain any help besides the notes that were added to the model by the creator of said model. Some tools show a hint to a user showing the name of an object when the user moves the mouse over said element.

The help provided by such tools is formulated using the dialect of the tool. Furthermore, the help is not customizable to be used by experts of other domains or non-experts. The automatic help generation of present tools only allows creating a summary of a model or a program in form of a linearly ordered text. The semantics of the model elements and meaning of diagrams must be explained additionally by the model developer in form of an attached description. This step is often omitted by the developers because of time pressure or laziness.

Therefore, it is an object of the present invention to simplify the generation of explanations of elements of formal languages for users.

### SUMMARY OF THE INVENTION

To accomplish this object the present invention provides a computer implemented method with the features of claim 1, an apparatus with the features of claim 14, a network server with the features of claim 17 and a computer program product with the features of claim 19.

Accordingly, the present invention provides:

A computer implemented method for generating user element explanations for elements of a formal language, the method comprising the steps of identifying at least one element of said formal language, selecting according to a target domain a respective mapping rule for each identified element, wherein the mapping rule refers to at least one word of a natural language and/or at least one audio file, generating at least one user element explanation for each identified element by automatically combining the respective at least one word of a natural language and/or at least one audio file according to predefined grammar rules, wherein the predefined grammar rules form part of the selected mapping rule and specify how to combine the at least one word of a natural language and/or at least one audio file into said user element explanation, and linking the generated at least one user element explanation with the respective identified element of said formal language.

An apparatus for generation of a user element explanation for elements of a formal language using the method according to the present invention, the apparatus comprising at least one first memory device configured to store at least one mapping rule for at least one of said elements, wherein the mapping rule refers to at least one word of a natural language and/or at least one audio file, at least one second memory device configured to store the at least one word of a natural language and/or at least one audio file, and a programmable device configured to load at least one mapping rule for at least one element from the first memory device and configured to read from the second memory device at least one word of a natural language and/or at least one audio file according to the at least one loaded mapping rule and configured to automatically generate a user element explanation from the at least one word of a natural language and/or at least one audio file according to at least one grammar rule that forms part of the loaded mapping rule.

A network server comprising an apparatus according to the present invention, at least one network interface, and at least one processing unit, configured to receive requests for user element explanations over the network interface and to replay to said received requests by sending to the author of said request a corresponding user element explanation generated by the apparatus.

A computer program product comprising computer readable instructions, wherein the computer readable instructions cause a programmable device to present a link to at least one user element explanation for at least one element of a formal language, wherein the link comprises a selection of at least one level of detail in which the user element explanation can be requested, receive a link selection of a user element explanation with a corresponding level of detail from a user, load the selected user element explanation, and present the loaded selected user element explanation to the user.

The present invention is based on the conclusion that users cannot be forced to provide a detailed explanation of single elements of for example a model every time a user creates a model.

Therefore, the present invention uses this knowledge to provide means to automatically create user element explanations of single elements of formal languages.

A formal language can be a text based language, like for example Java, XML or the like. But a formal language can also be a model based formal language, like for example UML, SysML, Matlab/Simulink, SDL, Modelica, Catia or the like.

Using the method and/or apparatus allows automatic creation of user element explanations without the need for a user who creates a new model or program to input a detailed description of every element a user uses in his model or program. By providing a set of predefined mapping rules the present invention furthermore allows to automatically add user element explanations to new programs or models formulated in a formal language as the user builds said programs or models. No interaction of the user with the user element explanation means is necessary if the user does not want to change the predefined mapping rules or the user element explanations generated based on said mapping rules.

The present invention furthermore allows automatic creation of user element explanations for different target domains based on specific mapping rules. A target domain is not limited to one of the formal languages listed above. A target domain can for example comprise non-expert users like for example managers. A user element explanation for a non-expert target domain would comprise little or no specific technical terms. Such a user element explanation would try to explain the element for users that do not have a technical background.

Further embodiments of the present invention are subject of the further subclaims and of the following description, referring to the drawings.

In one embodiment selecting a respective mapping rule comprises receiving an indication of a natural language in which the user element explanation should be generated and selecting a respective mapping rule according to said received indication. This allows automatically creating user element explanations in different languages.

In one embodiment selecting a respective mapping rule comprises selecting a mapping rule according to a specified formal language and selecting at least one word of a natural language and/or at least one audio file according to the selected mapping rule. This allows automatically creating user element explanations according to the semantics and technological terms of different formal languages. If user element explanations for one single element are created according to the semantics and technological terms of different formal languages it is easily possible for experts of different domains to understand that single element by reading or listening to the user element explanation according to the formal language of said expert.

In one embodiment selecting a respective mapping rule comprises selecting a mapping rule according to a specified level of detail for said user element explanation and selecting at least one word of a natural language and/or at least one audio file according to the selected mapping rule. This allows providing different user element explanations to a user depending on the specific interest of said user in the respective element. If for example a user only wants to get an overview of an element he could be presented with a short explanation of said element. If another user wants to receive detailed information about an element that user could be presented with a long and detailed explanation of said element.

In one embodiment the steps of selecting, generating and linking are repeated for every formal language of a plurality of formal languages and for every identified element of said formal languages. This allows building a library of user element explanations and using the library to add user element explanations to any new document that is formulated in a formal language for which a library has already been built.

In one embodiment the method comprises the steps of adapting at least one of the mapping rules, and/or creating a new user element explanation by generating at least one mapping rule for at least one element of at least one formal language. This allows dynamically updating or expanding a set or a library of user element explanations.

In one embodiment generating a mapping rule comprises the steps of selecting a formal language for which the mapping rule applies, and/or selecting an element for which the mapping rule applies of the selected formal language, and/or selecting a natural language in which the user element explanation, which is generated by said mapping rule that is generated, is formulated, and/or selecting a level of detail for which the mapping rule that is generated applies, and/or receiving a grammar rule, which specifies how to combine at least one word of a natural language and/or one audio file of said selected natural language into a user element explanation, and/or checking said mapping rule for consistency, and storing said mapping rule that is generated. This allows to effectively create a new mapping rule.

In one embodiment a grammar rule comprises a description of how to combine words of a natural language and properties of the at least one identified element, wherein the properties of the at least one identified element comprise at least one of a name, a category, a type, an owner, zero or more references to nested elements, references to other elements that are not nested within the at least one identified element, a default word of a natural language, and/or a default audio file. Grammar rules allow automatically assembling user element explanations in a very simple manner.

In one embodiment the description of how to combine words of a natural language and properties of the at least one identified element comprises a concatenated string representation of words of a natural language and/or properties of the at least one identified element. If user element explanations are generated by combining simple string representations of words of a natural language and properties of an element a flexible and very simple generation of user element explanations becomes possible.

In one embodiment the description of how to combine words of a natural language and properties of the at least one identified element comprises a model representation, especially an UML diagram representation, comprising at least one of words of a natural language, properties of the at least one identified element and combination rules for said words of a natural language and said properties. This allows users that do not possess the knowledge of how to describe a grammar rule by a string representation to create grammar rules with model based visual editors.

In one embodiment mapping rules are stored in vocabulary tables, wherein each vocabulary table comprises the mapping rules for one single target domain. This allows to effectively store the mapping rules and to effectively access single mapping rules.

In one embodiment the at least one user element explanation is generated as human readable text, and/or the human readable text is reproduced as audio by a speech synthesis device when said user element explanation is requested. If user element explanations are generated as human readable text the user element explanations can be stored very effectively and using a reduced amount of memory. The conversion into audio explanations by a speech synthesis device or program still allows providing audio explanations.

In one embodiment when automatically generating user element explanation on one first element a user element explanation on nested elements of said first element or elements referenced by said first element is automatically generated and coupled to the user element explanation which is generated for said first element. This allows providing extensive user element explanations for a certain element. If a user requests a very detailed explanation of an element this allows getting into the details of elements, which are related to the element for which the user originally requested a user element explanation.

In one embodiment an interface unit is configured to receive from a user a selection of at least one of a formal language for which the mapping rule applies, an element for which the mapping rule applies of the selected formal language, a natural language in which a user element explanation is formulated, a level of detail for which the mapping rule that is generated applies and a grammar rule, wherein the programmable device is further configured to combine the received user selection into a mapping rule, and/or wherein the programmable device is further configured to check at least one mapping rule for consistency. This allows providing a user with means to easily create new mapping rules without the user needing to learn new description languages or modeling languages. If the programmable device is further configured to automatically check a mapping rule for consistency a user can be informed about any deficiency of the rule which the user just created and the user can be provided with information on how to correct the mapping rule.

In one embodiment a web interface is configured to provide a web interface to the apparatus that is accessible over a network, especially an intranet and/or the internet, via a web browser, wherein the web interface is coupled to an interface unit and is configured to provide the user with a mapping rule creation means, the mapping rule creation means comprising selection means for selecting at least one of a formal language for which the mapping rule applies, an element for which the mapping rule applies of the selected formal language, a natural language in which a user element explanation is formulated, a level of detail for which the mapping rule that is generated applies and a grammar rule. If mapping rules can be generated via a web interface the barrier for users to access the mapping rule generation means is lowered to a minimum and the acceptance of the system amongst users will grow.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a diagram of an embodiment of a computer implemented method according to the present invention;
- Fig. 2: shows a block diagram of an embodiment of an apparatus according to the present invention;
- Fig. 3: shows a block diagram of an embodiment of a network server according to the present invention;
- Fig. 4: shows a user interface of an embodiment of a mapping rule generation means according to the present invention;
- Fig. 5: shows a diagram of an embodiment of a model based grammar rule according to the present invention;
- Fig. 6: shows a tree diagram of an embodiment of nested mapping rules according to the present invention;
- Fig. 7: shows a user interface of an embodiment of a computer program product according to the present invention.

### DETAILED DESCRIPTION OF EMBODIMENTS OF THE PRESENT INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

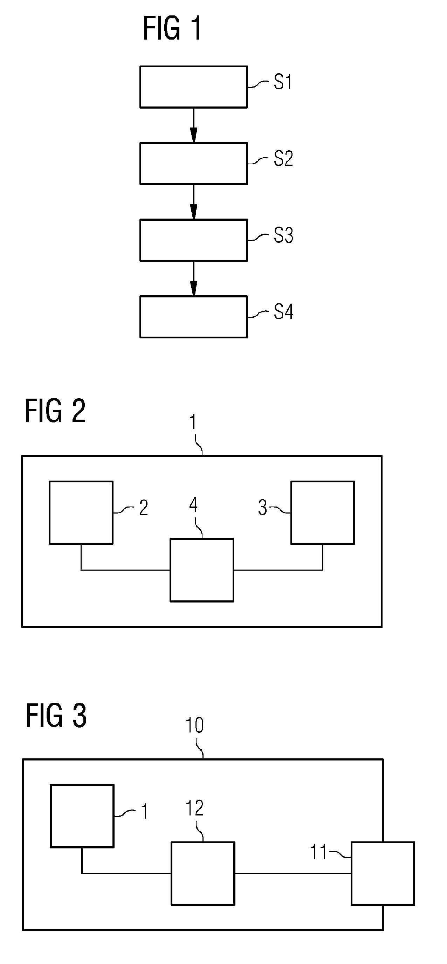

Fig. 1 shows a diagram of an embodiment of a computer implemented method for generating user element explanations for elements of a formal language according to the present invention.

In a first step S1 at least one element of said formal language is identified. After identifying at least one element a respective mapping rule is selected S2 according to a target domain for each identified element, wherein the mapping rule refers to at least one word of a natural language and/or at least one audio file. In a third step S3 at least one user element explanation for each identified element is generated by automatically combining the respective at least one word of a natural language and/or at least one audio file according to predefined grammar rules, wherein the predefined grammar rules form part of the selected mapping rule and specify how to combine the at least one word of a natural language and/or at least one audio file into said user element explanation. Finally, in a fourth step S4 the generated at least one user element explanation is linked with the respective identified element of said formal language.

In another embodiment further steps are possible. In one possible embodiment the method according to the present invention can be used in combination with a web server and the webserver can provide means for adapting or generating mapping rules. In such an embodiment mapping rule generation steps are included in the method.

Fig. 2 shows a block diagram of an embodiment of an apparatus according to the present invention.

The apparatus 1 for generation of a user element explanation for elements of a formal language in fig. 2 comprises at least one first memory device 2 configured to store at least one mapping rule for at least one of said elements, wherein the mapping rule refers to at least one word of a natural language and/or at least one audio file and comprises at least one grammar rule which defines how to combine said at least one word of a natural language and/or at least one audio file into a user element explanation.

The apparatus 1 furthermore comprises at least one second memory device 3 configured to store the at least one word of a natural language and/or at least one audio file;

Finally, the apparatus 1 comprises a programmable device 4 configured to load at least one mapping rule for at least one element from the first memory device 2 and configured to read from the second memory device 3 at least one word of a natural language and/or at least one audio file according to the at least one loaded mapping rule.

The programmable device 4 is furthermore configured to automatically generate a user element explanation from the at least one word of a natural language and/or at least one audio file according to the at least one grammar rule that forms part of the loaded mapping rule.

According to the present invention mapping rules can be specified for a plurality of technical domains. In one embodiment mapping rules are defined for different formal languages, for example SysML, UML and Modelica. By generating user element explanations the present invention aids experts that use one formal language to understand programs or models generated in another formal language.

For example the concept generally known as a "class" in object oriented programming can have different names in different formal languages. In SysML and Simulink for example a "block" is the element which resembles the concept of a "class" the most. In UML a "class" is called a "class" and in Modelica a "class" is called a "component".

From the above example it can be seen that the more different formal languages users that want to communicate one with another use the more difficult the communication between said users will be. The present invention aids those users in communicating by providing different explanations for one single concept, like e.g. a "class", wherein the explanations are tailored to the specific technical language of experts of different formal languages.

Fig. 3 shows a block diagram of an embodiment of a network server according to the present invention.

The network server 10 of fig. 3 comprises an apparatus 1 according to the present invention and at least one processing unit 12, which is coupled to the apparatus and to at least one network interface 11.

The processing unit 12 is configured to receive requests for user element explanations over the network interface 11 and to replay to said received requests by sending to the author of said request a corresponding user element explanation generated by the apparatus 1.

The network server 10 can be implemented as a web server 10. In one such embodiment the web server provides a user interface which enables users to modify and create new mapping rules and grammar rules. In one embodiment the user interface allows a user to browse a set of mapping rules or grammar rules.

Furthermore, in one embodiment the web server 10 can be enabled to provide user element explanations to users via a web interface or a predefined application programming interface (API). In one embodiment the API is a REST-ful API and access to user element explanations is granted via unique resource identifiers (URIs).

In another embodiment the network server 10 can be accessed from client computers, terminals or workstation via remote procedure calling (RPC) or via a proprietary data transmission protocol.

Using a network server 10 according to the present invention a plurality of users can access, modify and extend the database of mapping rules and grammar rules. In one embodiment the network server 10 is a network server 10 of an intranet, for example of a company's intranet. In such an embodiment a plurality of e.g. development departments can be distributed in various dependencies of said company. Developers can be distributed all over the world and use different programming and modeling tools.

The present invention helps such companies to foster communication between developers and also between developers and non-technical personal, for example executives.

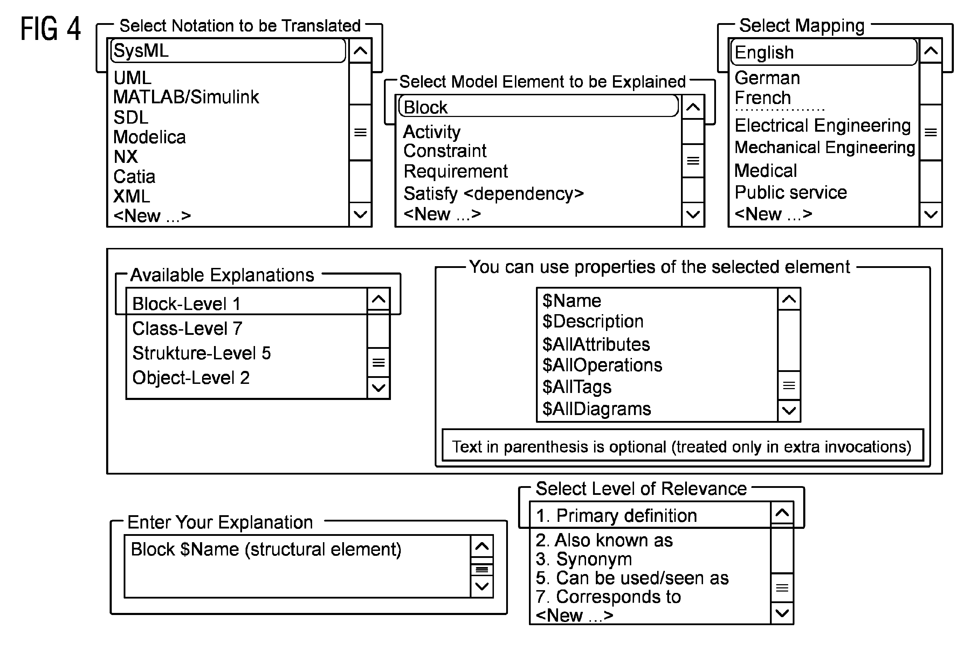

Fig. 4 shows a user interface of an embodiment of a mapping rule generation means according to the present invention.

The user interface of fig. 4 can be the user interface a web server 10 presents to a user who wants to create or modify a mapping rule. In one embodiment the user interface provides selection means titled "Select Notation to be Translated" to select the formal language, titled "Select Model Element to be Explained" to select the element of the formal language for which the user wants to generate or modify a mapping rule, titled "Select Mapping" to select a language and/or a technical domain for which the mapping rule is generated, and titled "Available Explanations" to select an already available mapping rule. The user interface furthermore comprises selection means titled "You can use properties of the selected element" which show properties like the name, the description and the like of the selected element. These properties can be used as placeholders in grammar rules. Thereby the grammar rules define how to combine the properties and other words of the selected natural language into a user element explanation.

Finally, the user interface provides an input field into which the user can type a grammar rule in form of a string representation, and a selection means to select the level of relevance of the mapping rule titled "Select the level of Relevance".

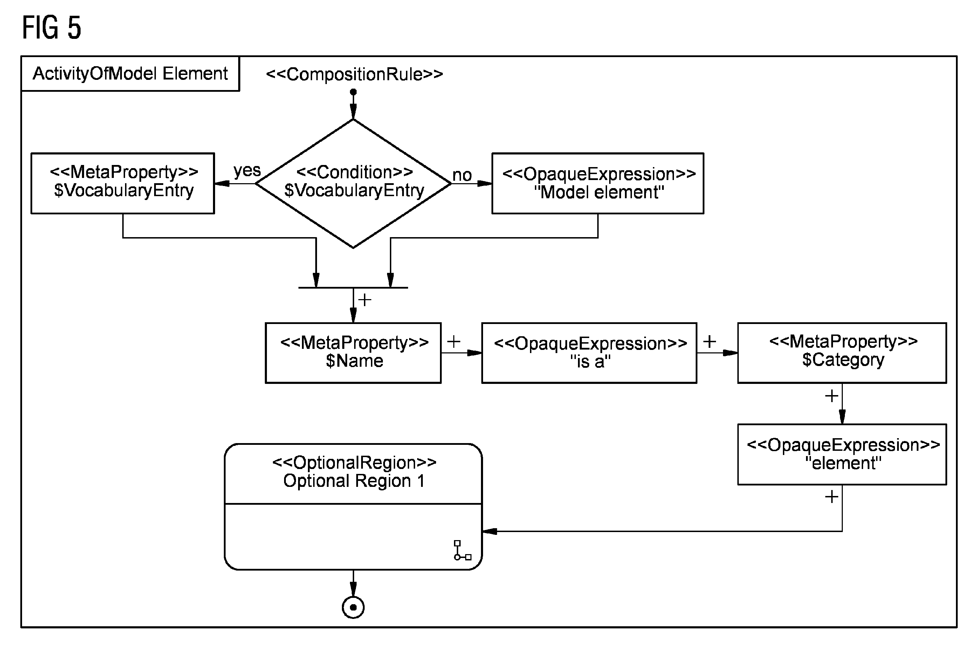

Fig. 5 shows a diagram of an embodiment of a model based grammar rule according to the present invention. The grammar rule in fig. 5 shows a default grammar rule for the generation of a user element explanation. The default grammar rule can be used to generate user element explanations for new elements or for elements for which no specific mapping rule or grammar rule has been defined.

The grammar rule in fig. 5 is modeled as an UML activity diagram which defines how to combine properties of the element and words of a natural language into a string, wherein the string is the user element explanation. After the starting point of the activity diagram a check is performed whether a vocabulary entry is present for the element or not. If a vocabulary entry is present the string starts with said vocabulary entry. If no vocabulary entry is present the string starts with "Model element". In a second step the element name is appended to the string. In a third step the words "is a" are appended to the string. In a fourth step the element category is appended to the string. In a sixth step the word "element" is appended to the string. In the activity diagram there is an optional region block before the final end point. In one embodiment this block can be used to adapt the grammar rule.

The activity diagram of fig. 4 equals the following string represented grammar rule:
**$VocabularyEntry + $Name + "is a" + $Category + "element".**
   or
"Model element" + $Name + "is a" + $Category + "element".

If a user does not want to create mapping rules or grammar rules as activity diagrams or other types of diagrams according to the present invention the user can also directly input the string representation of the grammar rule or mapping rule.

In one embodiment the grammar rule includes links to audio files instead of words of a natural language. This allows directly combining audio files into a user element explanation. This embodiment can be used e.g. if no speech synthesis tool is available.

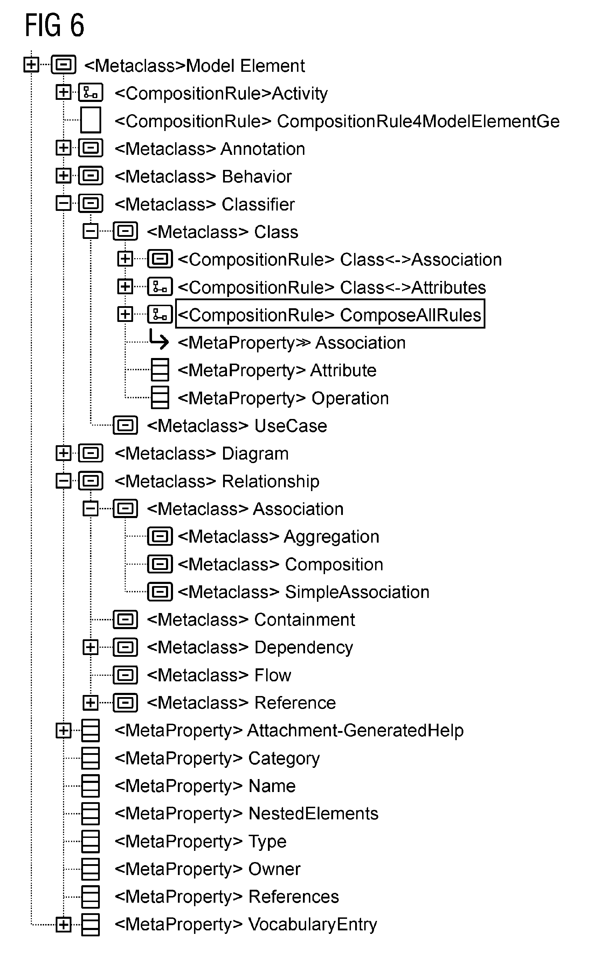

Fig. 6 shows a tree diagram of an embodiment of nested mapping rules according to the present invention.

The tree diagram can be used by users as a browser to browse a library or set of mapping rules. According to the present invention such a library or set is also called a vocabulary table.

Each entry in the tree diagram has a title. The title always starts with a keyword. Possible keywords are "Metaclass", "CompositionRule", "MetaProperty" and the like. The second word of the title is a name corresponding to said keyword.

For the keyword "Metaclass" the name equals the name of the element that is described in the "Metaclass" node of the tree diagram. The "Metaclass" nodes each refer to an element of a formal language for which user element explanations can be generated. A possible title of a metaclass node is for example "<<Metaclass>> Association".

The "CompositionRule" title is a link from one "Metaclass" to another "Metaclass". On possible composition rule is "<<CompositionRule» Class <-> Association".

The "MetaProperty" tree nodes comprise the properties of a "Metaclass" element. Possible properties are for example "<<MetaProperty>> Name", "<<MetaProperty>> Category", "<<MetaProperty>> Type" and the like.

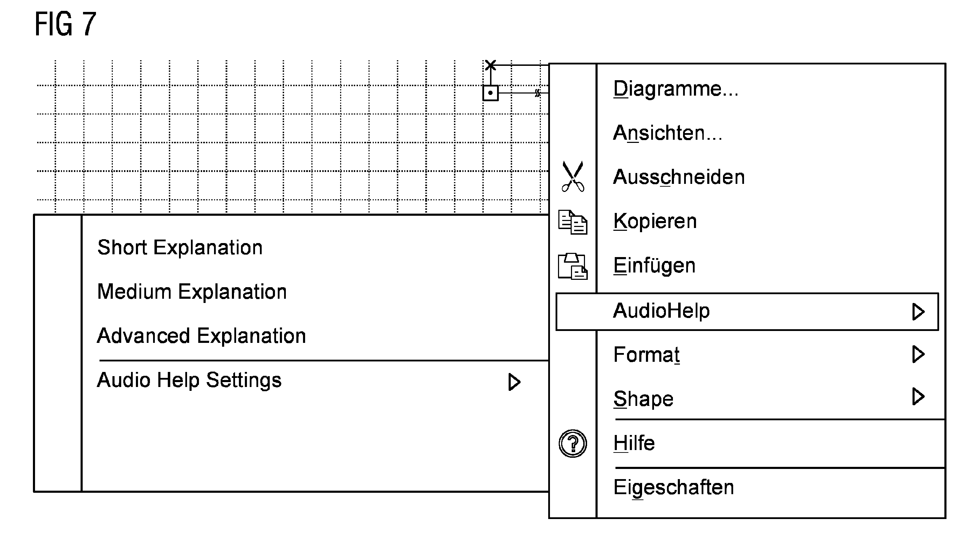

Fig. 7 shows a user interface of an embodiment of a computer program product according to the present invention.

A computer program product according to the present invention can be a plugin for a modeling tool like for example Matlab/Simulink. If in one embodiment a user wants to receive a user element explanation for an element of a Simulink model the user opens the context menu of said element and is presented with a menu, wherein the menu comprises an element named "AudioHelp". If a user selects the element "AudioHelp" a submenu opens which presents different explanations of different levels of detail to the user. The submenu furthermore presents an "Audio Help Settings" submenu to the user. The different user element explanations in one embodiment comprise a "Short Explanation", a "Medium Explanation" and an "Advanced Explanation".

If a user selects one of the user element explanations the respective user element explanation can be played to the user via audio speaker of the user's workstation.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily drawn to scale relative to each other. Like reference numerals designate corresponding similar parts.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. A computer implemented method for generating user element explanations for elements of a formal language, the method comprising the steps of:
identifying at least one element of said formal language;
selecting according to a target domain a respective mapping rule for each identified element, wherein the mapping rule refers to at least one word of a natural language and/or at least one audio file;
generating at least one user element explanation for each identified element by automatically combining the respective at least one word of a natural language and/or at least one audio file according to predefined grammar rules, wherein the predefined grammar rules form part of the selected mapping rule and specify how to combine the at least one word of a natural language and/or at least one audio file into said user element explanation;
linking the generated at least one user element explanation with the respective identified element of said formal language.

2. The method of claim 1,
wherein selecting a respective mapping rule comprises:
receiving an indication of a natural language in which the user element explanation should be generated and selecting a respective mapping rule according to said received indication.

3. The method of claim 1, wherein selecting a respective mapping rule comprises:
selecting a mapping rule according to a specified formal language and selecting at least one word of a natural language and/or at least one audio file according to the selected mapping rule.

4. The method of claim 1, wherein selecting a respective mapping rule comprises:
selecting a mapping rule according to a specified level of detail for said user element explanation and selecting at least one word of a natural language and/or at least one audio file according to the selected mapping rule.

5. The method of claim 1, wherein the steps of selecting, generating and linking are repeated for every formal language of a plurality of formal languages and for every identified element of said formal languages.

6. The method of claim 1, wherein the method comprises the steps of:
adapting at least one of the mapping rules; and/or
creating a new user element explanation by generating at least one mapping rule for at least one element of at least one formal language.

7. The method of claim 6, wherein generating a mapping rule comprises the steps of:
selecting a formal language for which the mapping rule applies; and/or
selecting an element for which the mapping rule applies of the selected formal language; and/or
selecting a natural language in which the user element explanation, which is generated by said mapping rule that is generated, is formulated; and/or
selecting a level of detail for which the mapping rule that is generated applies; and/or
receiving a grammar rule, which specifies how to combine at least one word of a natural language and/or one audio file of said selected natural language into a user element explanation; and/or
checking said mapping rule for consistency;
storing said mapping rule that is generated.

8. The method of claim 1, wherein a grammar rule comprises a description of how to combine words of a natural language and properties of the at least one identified element;
wherein the properties of the at least one identified element comprise at least one of a name, a category, a type, an owner, zero or more references to nested elements, references to other elements that are not nested within the at least one identified element, a default word of a natural language, and/or a default audio file.

9. The method of claim 8, wherein the description of how to combine words of a natural language and properties of the at least one identified element comprise a concatenated string representation of words of a natural language and/or properties of the at least one identified element.

10. The method of claim 8, wherein the description of how to combine words of a natural language and properties of the at least one identified element comprises a model representation, especially an UML diagram representation, comprising at least one of words of a natural language, properties of the at least one identified element and combination rules for said words of a natural language and said properties.

11. The method of claim 1, wherein mapping rules are stored in vocabulary tables, wherein each vocabulary table comprises the mapping rules for one single target domain.

12. The method of claim 1,
wherein the at least one user element explanation is generated as human readable text; and/or
wherein the human readable text is reproduced as audio by a speech synthesis device when said user element explanation is requested.

13. The method of claim 1,
wherein when automatically generating user element explanation on one first element a user element explanation on nested elements of said first element or elements referenced by said first element is automatically generated and coupled to the user element explanation which is generated for said first element.

14. An apparatus for generation of a user element explanation for elements of a formal language using the method of at least one of claims 1 - 13, the apparatus comprising:
at least one first memory device configured to store at least one mapping rule for at least one of said elements, wherein the mapping rule refers to at least one word of a natural language and/or at least one audio file;
at least one second memory device configured to store the at least one word of a natural language and/or at least one audio file;
a programmable device configured to load at least one mapping rule for at least one element from the first memory device and configured to read from the second memory device at least one word of a natural language and/or at least one audio file according to the at least one loaded mapping rule and configured to automatically generate a user element explanation from the at least one word of a natural language and/or at least one audio file according to at least one grammar rule that forms part of the loaded mapping rule.

15. The apparatus of claim 14, the apparatus further comprising:
an interface unit configured to receive from a user a selection of at least one of a formal language for which the mapping rule applies, an element for which the mapping rule applies of the selected formal language, a natural language in which a user element explanation is formulated, a level of detail for which the mapping rule that is generated applies and a grammar rule;
wherein the programmable device is further configured to combine the received user selection into a mapping rule; and/or
wherein the programmable device is further configured to check at least one mapping rule for consistency.

16. The apparatus of claim 14, wherein a grammar rule comprises a description of how to combine words of a natural language and properties of at least one element;
wherein the properties of the at least one element comprise at least one of a name, a category, a type, an owner, zero or more references to nested elements, references to other elements that are not nested within the at least one identified element, a default word of a natural language, and/or a default audio file.

17. A network server comprising:
an apparatus according to at least one of claims 14 - 16;
at least one network interface;
at least one processing unit, configured to receive requests for user element explanations over the network interface and to replay to said received requests by sending to the author of said request a corresponding user element explanation generated by the apparatus.

18. The network server further comprising:
a web interface configured to provide a web interface to the apparatus that is accessible over a network, especially an intranet and/or the internet, via a web browser;
wherein the web interface is coupled to the interface unit of the apparatus and is configured to provide the user with a mapping rule creation means, the mapping rule creation means comprising selection means for selecting at least one of a formal language for which the mapping rule applies, an element for which the mapping rule applies of the selected formal language, a natural language in which a user element explanation is formulated, a level of detail for which the mapping rule that is generated applies and a grammar rule.

19. A computer program product comprising computer readable instructions, wherein the computer readable instructions cause a programmable device to:
present a link to at least one user element explanation for at least one element of a formal language, wherein
the link comprises a selection of at least one level of detail in which the user element explanation can be requested;
receive a link selection of a user element explanation with a corresponding level of detail from a user;
load the selected user element explanation; and
present the loaded selected user element explanation to the user.

20. The computer program product according to claim 19 further comprising computer readable instructions, wherein the computer readable instructions cause a programmable device to:
check at least one mapping rule for consistency.
